# EUROPEAN PATENT APPLICATION

(11) **EP 2 139 219 A1**
(43) Date of publication of application: **30.12.2009**
(21) Application number: 08290600.9
(22) Date of filing: 24.06.2008
(51) Int. Cl.: H04M 17/00, H04M 15/00, G06Q 30/00

(54) **Stimulation of use of telephony networks**

(71) Applicant: Alcatel Lucent, 75008 Paris (FR)
(72) Inventor: Logan, Ian, Chippenham Wiltshire SN15 3GA (GB)
(74) Representative: Kensett, John Hinton

(57) **Abstract**

An apparatus for stimulation of end users of a telephony system to make calls or use services is disclosed, comprising apparatus for facilitating use of one or more data or voice services by an end user and adapted to trigger a notification mechanism to an event categoriser and counter node (ECCN) adapted to receive trigger notification and to update counters relating to individual end users or groups of end users to track one or more types of data and/or voice said ECCN comprising means for creating and defining user thresholds and associated actions when those thresholds are reached and for instigating actions to notify individual end users when their usage is approaching, reached or exceeds thresholds.

## Description

### Background of the Invention

This invention relates to the stimulation of use of telephony networks. In particular, it relates to apparatus and methods for real time or near real time stimulation of users and subscribers to use telephony networks and services. The invention is particularly useful in the mobile telephony environment; advantageously the pre-paid domain. However, it is also useful in other environments and for post pay or other service models.

Up to now, network operators have typically relied on long term loyalty applications which operate by collecting data records that obtain historical subscriber usage data from various sources in the network into a central data store. The data store is then used by a data mining function which operates to analyse trends and so classify and identify usage behaviour in groups of subscribers. This analysis is then used as an input to marketing groups whose objective is to design (manually) and create a new service offering which is specific to a particular subscriber group and which will stimulate them into delivering more revenue through increased handset or other service usage.

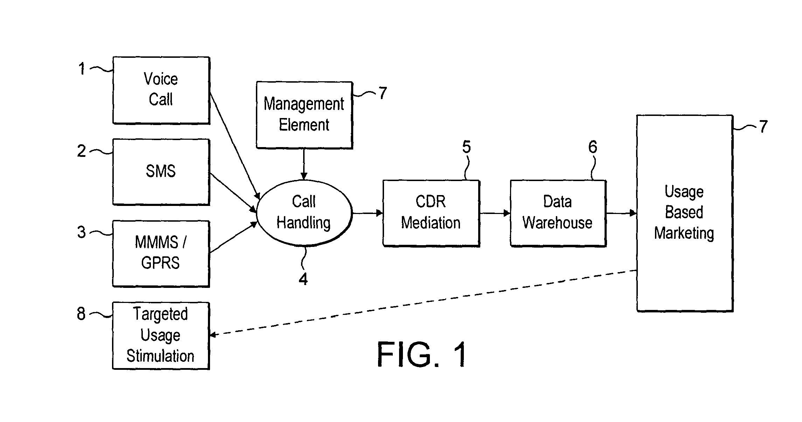

Figure 1 shows a typical such system. A user makes a voice call 1, or sends a SMS (text) message or uses multimedia messaging services (MMS), GPRS or other data or internet services 3 and details of this call or service usage goes through a call handling resource 4. The data then passes through a CDR (call data record) mediation 5 and is stored in a data warehouse 6. The data stored is, however, not specifically stored for any individual user, rather data related to trends and usage amongst groups of subscribers is recorded. A management element 7 controls the call only. The data is historical rather than real time. Usage based marketing team 7 (i.e. generally teams of people) then analyse for data eventually and use this data to determine specific services and incentives to offer particular groups of customers by targeting usage stimulation 8.

There are problems with this approach, as described above. Marketing groups and the businesses they represent need to educate and stimulate the end user in a reactive manner as soon as possible after the end user performs some activity, otherwise a window of opportunity is lost. However, with systems such as that shown in figure 1 the usage records generated can take hours, days, weeks or even months to generate and traverse the technical chain involved in creating, mediating and analysing the data to the point where marketing group can launch a new service offering. Since businesses often need numerous parallel offerings to be delivered, the time interval can become even larger when marketers wish to create multiple offerings. This can result in longer reaction times, lack of attention to the end user shifting traffic patterns and ultimately subscriber dissatisfaction. Existing methods do not address the end to end requirements and real time aspects of subscriber usage stimulation in the telephony network. They are typically focused on providing a non real time, call data/events data record, batch solution which trends and groups subscribers and which does not address online/real time environment or personalise, per subscriber details. It is difficult or impossible with present system to address a specific new product or incentive at a particular subscriber on a real time or near real time basis.

Further, with previously proposed systems, it may determined that, say, out of the total pre-paid customer base of a telephony provider, one hundred thousand people make more than five calls on a Sunday and that the majority of these callers possess an incentive card from a major chain store. Eventually a marketer might suggest a further incentive scheme that if a user makes more than five calls on a Sunday they obtain a £1.00 bonus to spend in that chain store. This incentive scheme can then be widely published, although it will not generally be specifically targeted at individuals, just generally published and advertised over the usual media such as newspapers, tv etc.

The mediation element 5 is necessary to convert data from the call handling element into a recognisable format where it can be stored in the data warehouse. As described above, other information relating to data subscribers can also be stored, from another data basis.

Because the system relies on CDR's (call data records) generated by other systems then the system is not in real time. Typical CDR generation times range from 1 to 15 minutes across pre-paid platforms. Furthermore, CDR's can be mediated 5 by a chain of other systems before they reach the data warehouse. This architecture can also add additional delays which are frequently more than one hour. Furthermore, the marketing itself typically executes trending and analysis as a batch processor at fixed times during the day. This ensures that even if human marketers act as swiftly as possible that the marketing solution is not completely able to be used to analyse behaviour for periods generally in excess of 24 hours and which can be considerably longer than this.

The present invention arose in an attempt to provide a method and apparatus for achieving much quicker analysis of individual customers/subscribers behaviour and usage of calls and services and to provide improved and more responsive stimulation.

### Summary of the Invention

According to the present invention in a first aspect there is provided a network node for a telephony network, comprising means for receiving trigger notifications related to voice and/or data usage made by an individual end user, one or more counters associated with each individual users; means for updating the counters relating to usage of voice and/or data services; means for determining thresholds and means for instigating actions to be transmitted to end users indicating that a threshold is approaching, has been reached or has been exceeded.

Preferably, the node includes means for determining incentives to stimulate a user. The incentives may be based upon said thresholds.

In a further aspect, there is provided a system for stimulation of end users of a communications network to make calls or use services, comprising a network node as above, and means for facilitating use of one or more data or voice services by an end user and adapted to trigger a notification mechanism to said network node.

The present invention further provides a method of stimulating use by an end user of voice and/or data network, comprising providing a trigger notification, related to voice and/or data usage made by an individual end user, to a network node, the node being used to update one or more counters relating to individual end users and to use the contents of the counter, in real time, to instigate action for alerting individual end users that thresholds are approaching, reached or exceeded and for determining stimuli/incentives for transmitting to the user relating to the users usage of services.

The node, termed event categoriser and counter node (ECCN) herein below, differs from previously available pre-paid billing and loyalty management solution in the following way:
a) PrePaid systems are a real time billing application modifying balance based on the subscriber usage.
b) The ECCN provides notifications to end users (such as text messages and MMS) based on their activity in order to stimulate their behavior (it does not modify any balance)
c) Loyalty Management Systems are applications that take CDR data from PrePaid systems and gives actual rewards to customers in the form of balance once a given threshold is reached. The ECCN is intended to stimulate the end user to reach that reward threshold by monitoring their daily activity and sending stimulus messages

This is a technical function that Loyalty Management does not contain, and could not perform due to its own technical limitations.

The trigger contents are proposed to be less than 100 bytes as opposed to 1532 bytes in a standard PrePaid CDR - a significant performance benefit which enables the real time processing to occur.

There is no local database to store static subscriber profile data, the node is intended to act only on the real time per subscriber data which it receives.

### On receipt of the trigger at the node:

The notification trigger from prepaid billing should be 'notify and continue' so that prepaid call handling is not held up and the "Event Categorizer & Counter Node" does not have to acknowledge.
There will be real time database entry for each subscriber which increments a predefined group of tables that define, for example, daily, weekly, monthly, yearly, weekend, and special counters as soon as the trigger is received.
Preferable, there is no local database to store static subscriber profile data.
Once the real time database tables are updated for that subscriber the "Event Categorizer & Counter Node" checks to determine if the thresholds appropriate to each counter are reached, and sends SMS notification to end user appropriately.

This definition architecture enables a comprehensive and repeatable strategy for usage based stimulus across the telecommunctions domain, whilst presenting both a recognisably unique and differentiating architecture.

The invention also provides a pre-paid domain including means for generating trigger notification relating to use of voice and/or data services by individual end users and for transmitting these in real time or near real time to a network node..

### Brief Description of the Drawings

Embodiments of the invention will now be described, by way of example, only with reference to the accompanying schematic drawings in which:
Figure 1 shows parts of a telephony network including a marketing analysis tool;
Figure 2 shows a system embodying the present invention
Figure 3 shows use of an architecture to provide responses and stimulation for a subscriber who has made priority of voice calls;
Figure 4 shows a similar diagram for a user who has made a number of data calls;
Figure 5 shows a similar diagram for a user who has sent a number of text (SMS) messages;
Figure 6 shows a similar diagram for a user who has made a combination of events (voice, SMS, data); and
Figure 7 is a data model of an event categoriser and counter mode.

### Description of Preferred Embodiments of the Invention

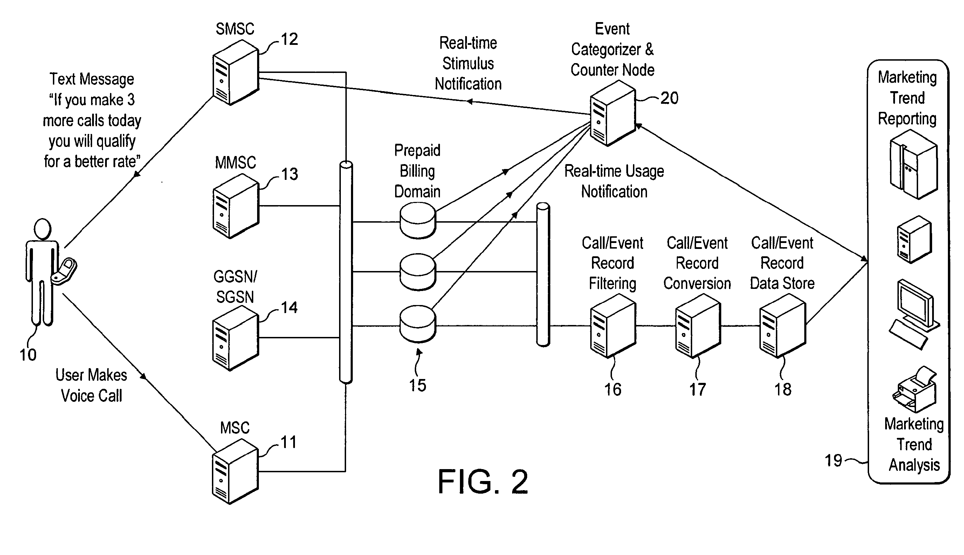

Referring to the drawings, figure 2 shows a pre-paid billing implementation. Note, as described above, that the invention may also be applicable to the post-pay domain or to other models.

A pre-paid end user then can do one of four things with their headsets, in this embodiment. They can make voice calls via Mobile Switching Centre (MSC) 11 send a text message via Server Mobile Switching Centre (SMSC) 12, send a Multi-Media (MMS) message via Mobile Messaging Switching Centre (MMSC) 13 or download data/access the internet or similar via Gateway GPRS Support Node/Serving GPRS Support Node (GGSN/SGSN) 14. Access to each of these facilities is facilitated by the appropriate element 11 to 14 and all services are controlled and billed by a central system in the network termed pre-paid billing domain 15. This control and bills activities by the user. Data from here is sent to a call event record filtering module 16, then to a call event record conversion (mediation) module 17 and a call event record data store (data warehouse) 18 from where data is obtained for use by a marketing module 19 which can include marketing trend reporting and marketing trend analysis.

The pre-paid billing domain 15 is also arranged to trigger a notification mechanism to an external entity, and event categoriser and counter node 20. The data is sent in real time, or nearly real time to this node 20. The notification mechanism may be triggered when that call logic reaches a certain point. The content of the trigger notification is a set of criteria used to rate/charge the call.

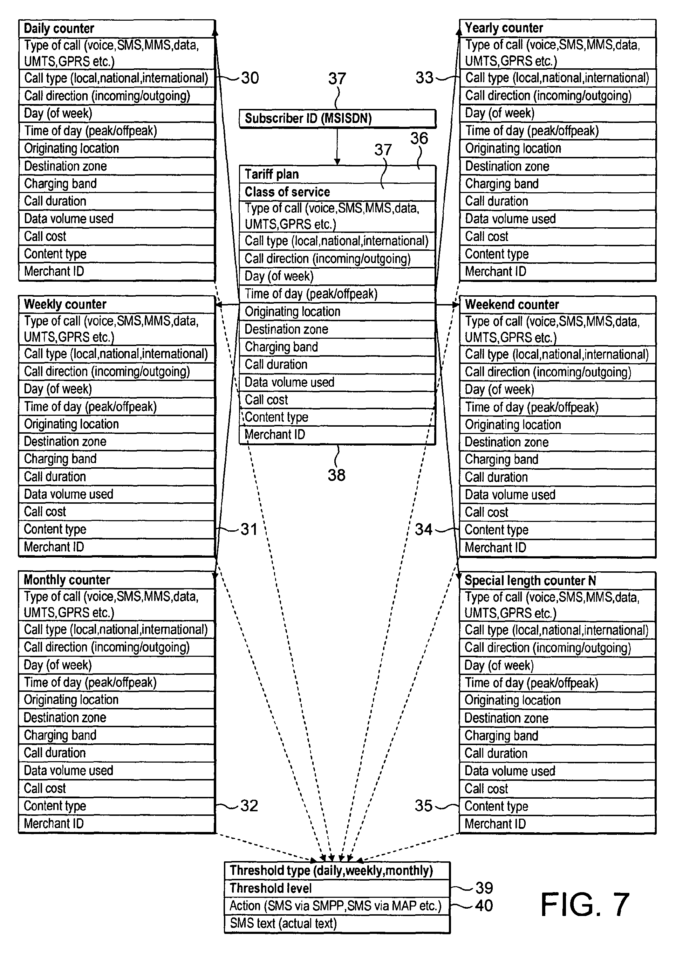

The event categoriser and counter node (ECCN) is able to receive the trigger notifications from the pre-paid domain and to categorise and update internal per subscriber counters to keep track of per subscriber usage. Thus, individual counters are maintained for each subscriber and a number of different counters are most preferably maintained for each subscriber, as will be disclosed further below, particularly with reference to figure 7. The ECCN is also provided with functionality enabling it to create and define usage threshold and associated actions when those thresholds are reached. It is provided with means for instigating or distributing direct delivery short messages (SMS messages) to the user 10 by his handset to notify the end user when the thresholds for various types of activities (voice, texts, data and so on) is approaching, reached or has exceeded one or more thresholds and this is done in real time or nearly real time.

### In preferred embodiments, the ECCN operates by:

An optimized 'trigger' from PrePaid billing at the end of each call (when PrePaid sends an INAP (Intelligent Network Application Part) Release Call, or TCAP (Transaction Capabilities Application Part) End, it should also send a 'notification trigger' in the form of Diameter Rf (a standard signaling protocol specified by the IEFT (Internet Engineering Task Force))or LDAP(Lightweight Directory Application Protocol)). This optimization is that only the real time data describing the call (a small number of Bytes, rather than a Kb's worth of CDR data) is sent:
Regardless of protocol, the trigger preferably contains: Static Data: Subscriber ID (MSISDN), Tariff Plan, Class of Service, Dynamic Data: Type Of Call (Voice, SMS, MMS, Data, UMTS, GPRS etc), Call Type (Local, National, International), Call Direction Incoming/Outgoing), Day (of week), Time Of Day (Peak/OffPeak), Originating Location, Destination Zone, Charging Band, Call Duration, Data Volume Used, Call Cost, Content Type, Merchant ID.

With the provision of the pre-paid billing domain being able to trigger notification signals and the ECCN, the architecture can track and respond to per subscriber usage patterns in real time whilst allowing for customer, personalised communication direct to the end user. This ensures that a business or service provider can provide on-line, reactive and responsive stimuli within a window of opportunity to stimulate further subscriber usage.

In the embodiment of Figure 2 the conventional batch-based tracking and monitoring system 16 - 19 can still operate for providing long term and group based incentive and usage monitoring tools in addition to the subscriber based system disclosed.

The trigger is preferably provided by the pre-paid billing domain at the end of a user call or event. That is, once a call has been finished, and a SMS or MMS message sent, or a data session has ended, a notification is triggered and sent to the ECCN.

Specific examples will be shown further below, but essentially the invention, and the benefits of it are as follows. A real time trigger is generated at the end of a user call/event. Typically, this will be based on TCP/IP protocol for widest possible acceptance so that is it not dependent upon proprietary or existing protocol. It should preferably be a "file and forget" protocol so that call logic processing or end user interaction is not delayed. It is transaction based to ensure guarantee of delivery in an appropriate order. As described further below, the payload of the notification may contain call characteristics to enable usage tracking, such as but not limited to, location, destination, type of access, time of day, type of event, duration, size, tariff plan, cost, quality of service, day of week.

The ECCN will generally be provided externally to the pre-paid billing domain. It includes capability for receiving a trigger notification from the pre-paid domain, categorising and updating internal per subscriber counters based on the trigger content to keep track of individual subscriber usage and the ability to create and define usage threshold per trigger content, or combination or content. The ability to create actions to be performed when usage thresholds are approached, reached, exceeded or any combination thereof and which actions may include for example the generation of incentives and the ability to execute actions such as direct delivery short messages to the handset to notify the end user when there usage is approaching, reached or exceeded thresholds. Other types of action for notifying the user may be used.

As is shown in Figure 2, the ECCN can also generate reports 21 to a marketing module 19 for use by the business/marketing teams to track and report online status of end usage.

The system therefore provides a trigger at an end of a user call/event, a file and forget protocol , and real time delivery of end user usage. This compares with previous mechanisms which can only react within periods of days, weeks or even months. Additional traffic categorisation is not necessary as the pre-paid billing mode reports directly the traffic categories used to rate a call/event in the first place. Note that end user thresholds and notifications are also separated from the pre-paid billing domain and thus there is a performance and capacity benefit where it is to previously available systems.

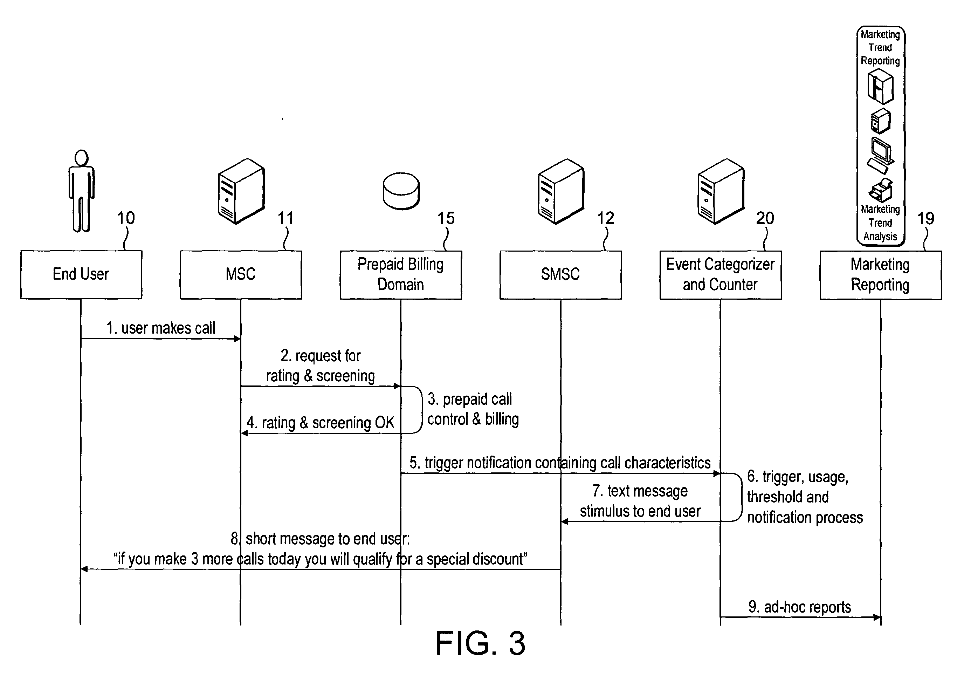

Examples of use are shown in Figures 3 to 6.

Figure 3 shows an example of signalling when a subscriber has made a number of voice calls which cause monitoring thresholds to be exceeded and a stimulation (incentive) sent to the end user. The flow is as follows:
1. Voice call is attempted by the end user
2. MSC handles call, identifies it as a prepaid call, and forwards to the PrePaid billing domain
3. PrePaid billing domain provides call control and billing for prepaid call
4. PrePaid billing domain instructs MSC to continue the call
5. PrePaid billing domain sends real time trigger to Event Categorizer and Counter Node
6. Event Categorizer and Counter determines if the subscriber is approaching has reached, or has exceeded any thresholds (based on any criteria in the real time trigger)
7. Event Categorizer and Counter determines that subscriber has met criteria and sends a stimulus message to the SMSC
8. SMSC distributes text message to end user
9. Ad-hoc report is generated to downstream marketing/reporting for analysis/status.

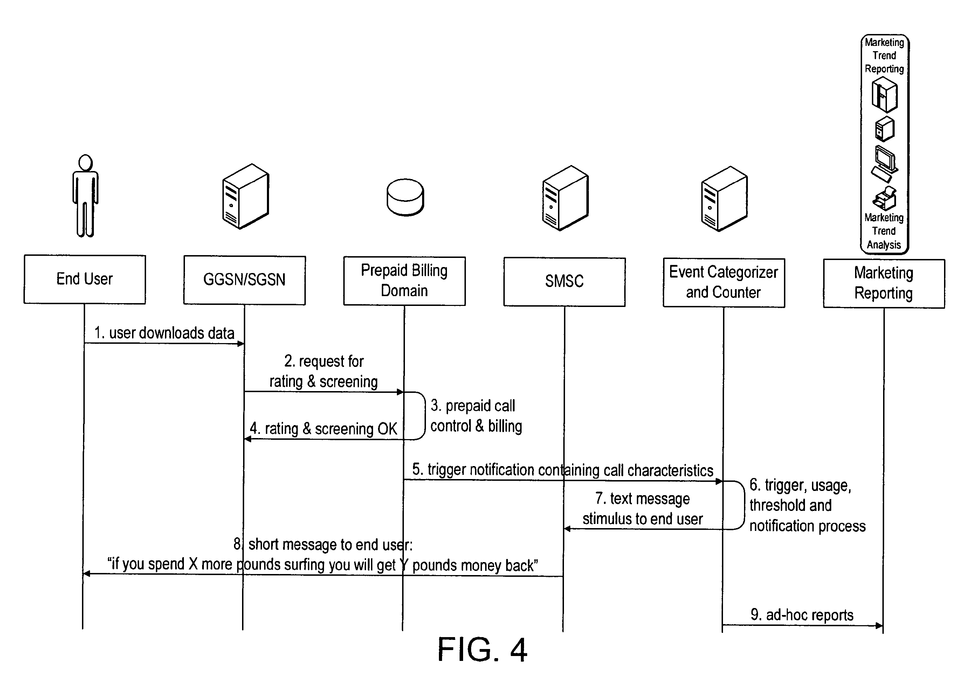

Figure 4 shows an example of signalling for responding to a subscriber who has made a number of data calls (e.g. GPRS/MMS) which cause monitoring thresholds to be exceeded and a stimulation to be sent to the end user.
1. GPRS/MMS call is attempted by the end user
2. GGSN/SGSN handles call, identifies it as a prepaid call, and forwards to the PrePaid billing domain
3. PrePaid billing domain provides call control and billing for prepaid call
4. PrePaid billing domain instructs MSC to continue the call
5. PrePaid billing domain sends real time trigger to Event Categorizer and Counter Node
6. Event Categorizer and Counter determines if the subscriber is approaching has reached, or has exceeded any thresholds (based on any criteria in the real time trigger)
7. Event Categorizer and Counter determines that subscriber has met criteria and sends a stimulus message to the SMSC
8. SMSC distributes text message to end user
9. Ad-hoc report is generated to downstream marketing/reporting for analysis/status.

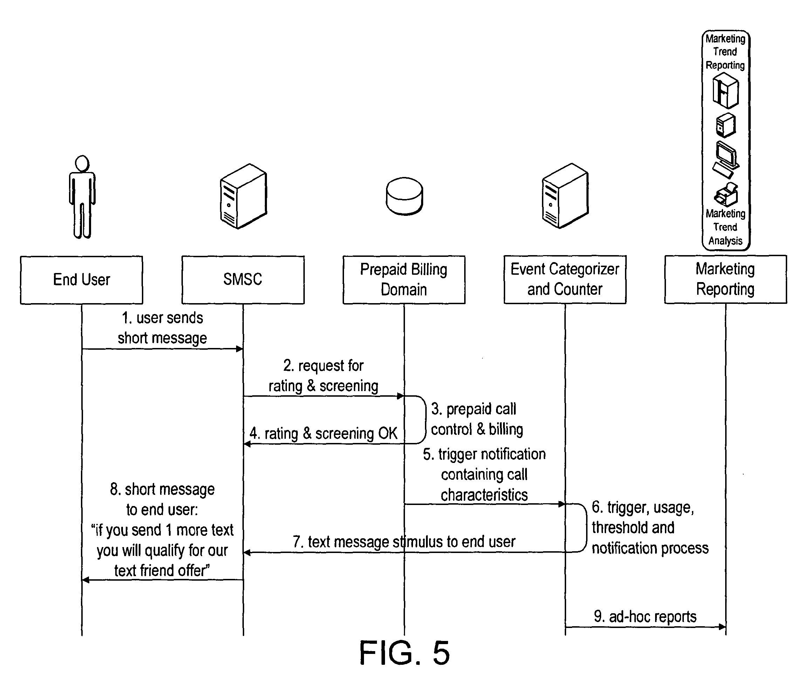

Figure 5 shows signalling for responding to a subscriber who has sent a number of text (SMS) messages, which cause monitoring thresholds to be exceeded and the simulation to be sent to the end user.
1. Text message is attempted by the end user
2. SMSC handles call, identifies it as a prepaid call, and forwards to the PrePaid billing domain
3. PrePaid billing domain provides call control and billing for prepaid call
4. PrePaid billing domain instructs MSC to continue the call
5. PrePaid billing domain sends real time trigger to Event Categorizer and Counter Node
6. Event Categorizer and Counter determines if the subscriber is approaching has reached, or has exceeded any thresholds (based on any criteria in the real time trigger)
7. Event Categorizer and Counter determines that subscriber has met criteria and sends a stimulus message to the SMSC
8. SMSC distributes text message to end user
9. Ad-hoc report is generated to downstream marketing/reporting for analysis/status

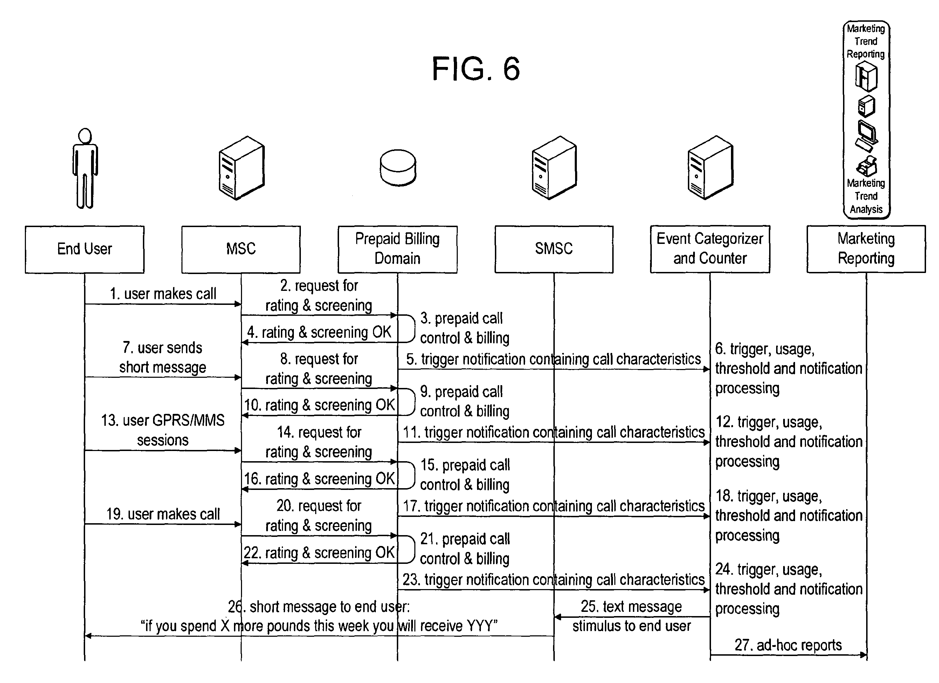

Figure 6 shows signalling to respond to a subscriber who has made a combination of events (voice calls, sending SMS messages, using data, etc) which cause a combination of monitoring thresholds to be exceeded and a stimulation to be sent to the end user.
1. Voice call is attempted by the end user
2. MSC handles call, identifies it as a prepaid call, and forwards to the PrePaid billing domain
3. PrePaid billing domain provides call control and billing for prepaid call
4. PrePaid billing domain instructs MSC to continue the call
5. PrePaid billing domain sends real time trigger to Event Categorizer and Counter Node
6. Event Categorizer and Counter determines subscriber has not approached, reached or exceeded any thresholds
7. Short message is attempted by the end user
8. SMSC handles call, identifies it as a prepaid call, and forwards to the PrePaid billing domain
9. PrePaid billing domain provides call control and billing for prepaid call
10. PrePaid billing domain instructs MSC to continue the call
11. PrePaid billing domain sends real time trigger to Event Categorizer and Counter Node
12. Event Categorizer and Counter determines subscriber has not approached, reached or exceeded any thresholds
13. GPRS/MMS session is attempted by the end user
14. GGSN/SGSN handles call, identifies it as a prepaid call, and forwards to the PrePaid billing domain
15. PrePaid billing domain provides call control and billing for prepaid call
16. PrePaid billing domain instructs MSC to continue the call
17. PrePaid billing domain sends real time trigger to Event Categorizer and Counter Node
18. Event Categorizer and Counter determines subscriber has not approached, reached or exceeded any thresholds
19. Voice call is attempted by the end user
20. MSC handles call, identifies it as a prepaid call, and forwards to the PrePaid billing domain
21. PrePaid billing domain provides call control and billing for prepaid call
22. PrePaid billing domain instructs MSC to continue the call
23. PrePaid billing domain sends real time trigger to Event Categorizer and Counter Node
24. Event Categorizer and Counter determines the subscriber has approached, reached or exceeded thresholds
25. Event Categorizer and Counter sends a stimulus message to the SMSC
26. SMSC distributes text message to end user
27. Ad-hoc report is generated to downstream marketing/reporting for analysis/status.

Many other scenarios will be apparent.

Figure 7 shows a data model for an ECCN. In this example, the various counters which are set up for each individual subscriber are a daily counter 30, a weekly counter 31, a monthly counter 32, a yearly counter 33, a weekend counter 34 and a special length counter 35. The ECCN also contains details of the tariff plan 36 of the user and the class of service 37 applicable to that use or can obtain these details.

Trigger notifications from the pre-paid billing domain 50 are sent to the ECCN which links them to a subscriber ID 37. The data may include type of call (voice, SMS, MMS, data, UMTS, GPRS, etc), call type (local, national, international), call direction (incoming/outgoing) day of week, time of day (i.e. whether the call or data request was made during peak or off-peak hours) originating location, destination zone, charging band, call duration, data volume used, call cost, content type and merchant ID. This is received as notification 38. The ECCN uses this in real time to increment the daily counter 30 relevant to that particular type of call or data. If appropriate, the weekly data 31 is also incremented and similarly the monthly, yearly and/or weekend counters 32, 33 and 34 may also be incremented if appropriate. A special link counter 35 accommodates other durations. These are used by the ECCN to determine whether thresholds (which may be daily, weekly, monthly threshold, or data quantity threshold or other types of threshold) are exceeded, nearing or reached 39. If they are then an action 40 is generated by the ECCN and this is typically the action of sending an SMS to a subscriber or by via SMPP, MAP protocols or so on to a SMSC for transmission in real time to the user 10.

The ECCN uses this data to generate stimuli/incentives for individual users, dependent upon their actual level of use.

Many different incentives and stimulations may be transmitted to the user, such as an incentive that now that the user has made five voice calls within the day if he makes two more he can benefit from a lower rate. Many other examples will be apparent.

The counters which are built up by the embodiments of the present invention may be accessed by for example, or employers, using a web access tool to monitor calls and data access for that particular user on a weekly, daily, monthly etc basis in real time or for many other purposes beyond stimulation and incentive analyzing.

## Claims

1. A network node for a communications network, comprising means for receiving trigger notifications related to voice and/or data usage made by an individual end user, one or more counters associated with each individual users; means for updating the counters relating to usage of voice and/or data services; means for determining thresholds and means for instigating actions to be transmitted to end users indicating that a threshold is approaching, has been reached or has been exceeded.

2. A network node as claimed in Claim 1, wherein the node is adapted to respond in real time so that end users are notified in real time as they approach a particular threshold and usage stimulating defense.

3. A network node as claimed in any preceding claim, wherein the node is adapted to generate stimuli/incentives tailored for individual end users dependent upon the level and type of use of voice and or data services by the user.

4. A network node as claimed in any preceding claim, wherein the node increments a plurality of counters for each end user.

5. A network node as claimed in any preceding claim, adapted to generate stimuli/incentives for individual users dependent upon the user's use of voice and/or data services.

6. A network node as claimed in any preceding claim, wherein the trigger notification uses Diameter rf or LDAP (Lightweight Directory Application Protocol).

7. A system for stimulation of end users of a communications network to make calls or use services, comprising a network node as claimed in any preceding claim, and means for facilitating use of one or more data or voice services by an end user and adapted to trigger a notification mechanism to said network node.

8. A system as claimed in Claim 7, including a pre-paid domain including means for generating trigger notifications relating to use of voice and/or data services by individual end users and for transmitting these in real time or near real time to the network node.

9. A method of stimulating use by an end user of voice and/or data network, comprising providing a trigger notification, related to voice and/or data usage made by an individual end user, to a network node, the node being used to update one or more counters relating to individual end users and to use the contents of the counter, in real time, to instigate action for alerting individual end users that thresholds are approaching, reached or exceeded and for determining stimuli/incentives for transmitting to the user relating to the user's usage of services.

10. A method as claimed in Claim 9, wherein the node receives said trigger notifications from apparatus relating to the provision of one or more voice and/or data services of a user.

11. A method as claimed in Claim 9 or Claim 10, wherein the node updates a plurality of counters relating to each end user.

12. A method as claimed in Claim 11, wherein counters relate to daily, weekly, monthly or other time duration periods.

13. A method as claimed in any of Claims 9 to 12, wherein the node causes SMS messages to be transmitted to an end user relating to thresholds and/or stimuli/incentives.

14. A method as claimed in any of Claims 10 to 13, wherein the node receives trigger notifications from a pre-paid domain.

15. A pre-pay domain node of a communications network, for facilitating voice and/or data services for end users, including means for generating trigger notifications relating to use of voice and/or data services by individual end users and for transmitting these in real time or near real time to an external node.
